Europäisches Patentamt

European Patent Office

Office européen des brevets

(11) Publication number: **0 117 239**
**B1**

## (12) EUROPEAN PATENT SPECIFICATION

(45) Date of publication of patent specification: **03.06.87**

(21) Application number: **84850023.7**

(22) Date of filing: **25.01.84**

(51) Int. Cl.⁴: **B 60 P 1/64,** B 60 P 1/02

(54) An arrangement in lorries comprising a vertically movable lifting frame for handling removable load-carries.

(30) Priority: **26.01.83 SE 8300377**

(43) Date of publication of application:
**29.08.84 Bulletin 84/35**

(45) Publication of the grant of the patent:
**03.06.87 Bulletin 87/23**

(84) Designated Contracting States:
**AT BE CH DE FR GB IT LI LU NL SE**

(56) References cited:
**EP-A-0 025 557**
**EP-A-0 045 398**
**AU-A- 46 991**
**AU-B- 416 749**
**DE-B-2 905 236**
**FR-A-2 504 466**
**SE-B- 366 256**

(73) Proprietor: **KALMAR LAGAB AB**
**Box 209 Industrivägen**
**S-312 01 Laholm (SE)**

(72) Inventor: **Henriksson, Arne**
**Elins Väg 1**
**S-312 05 Skottorp (SE)**

(74) Representative: **Ferkinghoff, Claes-Göran et al**
**ALFONS HEDBERGS PATENTBYRA AB**
**Aschebergsgatan 35**
**S-411 33 Göteborg (SE)**

Courier Press, Leamington Spa, England.

## Description

The present invention concerns an arrangement in lorries equipped with a lifting frame which is attached to the lengthwise frame beams of the lorry and which is arranged to be raised and lowered by means of link arms and piston-and-cylinder units to support one or several load-carriers. The load-carriers which could be e.g. load-carrying platforms, containers and similar freight-carrier means, comprise lengthwise support beams and are arranged to be secured to the lifting frame or to be lifted off the lorry with the aid of said frame.

Lorries equipped with means of this kind are versatile as they are capable of handling multipurpose load-carrying platforms. These platforms could actually be in the form of various types of superstructures, such as conventional platforms equipped with flaps, platforms of this kind equipped with a loading crane, insulated or non-insulated boxes, a load-supporting frame supporting standard-type of containers, tanks, dumping platforms or concrete containers. Such superstructures are equipped with extensible and telescopically prolongable support legs and, depending on the loading capacity, it is possible to mount the different kinds of superstructures on one and the same lorry according to need.

Mechanisms are already known to lift and lower the lifting frame of lorries, for instance from SE—B—366 256. They comprise several (usually at least eight) link arms and (usually at least two) piston-and-cylinder units arranged to control the lifting-frame movements in a parallel pattern and to provide the required lifting force. In the raised position of the lifting frame the support legs of the multipurpose loading platform may be made operational to support the platform whereafter the lifting frame may be lowered and the lorry is ready to collect and transport another multipurpose loading platform.

Lorry chassis to be equipped for handling of multipurpose platforms are available from manufacturers and importers in a variety of different models depending on the desired capacity in volume and effective load. For instance, the lorries may be equipped with two or three wheel axles and have different chassis lengths. There is no agreed-upon standard among lorry manufacturers as regards for instance the measurements between the inner and outer faces of the longitudinal frame beams.

From AU—B—46 991 is known a transport vehicle which is equipped with a lifting frame which may be raised and lowered relative to the support chassis. In accordance with this prior-art construction the chassis constitutes a part of the trailer of the transport vehicle and thus it is constructed and adapted from the beginning to be used with a lifting frame of a certain type and size. Consequently, it cannot easily be adapted to other kinds of lifting frames.

Manufacturers of the hoisting gear equipment to be mounted on the lorries to handle platforms of the multipurpose kind referred to must adjust their products to the various alternative modifications of lorries that are available on the market. The lifting frame is connected to the two longitudinal frame beams by means of the link arms and the piston-and-cylinder units. Since, as mentioned above, the width between the frame beams varies considerably between lorries of different makes and since also other kinds of equipment on the chassis impose restrictions as regards the connection of the lifting frame to the frame beams some components must be specially made to accommodate the various modified models and makes and be kept in stock.

All types of lifting gear comprises a number of components such as trunnion attachments and similar means which are unsuitable for mounting on the lifting frame prior to the delivery of the latter to the customers, for instance sales rooms or lorry servicing garages, where it is to be mounted on the lorry chassis. Mounting of the lifting frame to the chassis involves welding which must be carried out with the utmost care. The mounting work is also very time-consuming and the requirements on measurement exactness are high. A large number of the parts of the equipment delivered by the manufacturer and mounted on the chassis must be dismantled therefrom before the mounting of the lifting frame can be started and after completion thereof they must again be re-assembled on the chassis. In order to meet the security regulations, the chassis must be equipped with locking means in order to allow the lifting frame to be secured in position thereon.

The purpose of the subject invention is to provide a lifting device designed to handle loading platforms of multipurpose types, which device may be pre-fabricated within a predetermined capacity range in the form of a complete unit which in a simple mounting operation may be attached to the longitudinal lorry frame beams of lorries of all makes and models available on the market of the type designed to handle platforms of multipurpose type.

The invention is characterised by a mounting frame consisting of two lengthwise extending beams secured to the frame beams, said mounting frame being provided with at least three transverse beams projecting laterally across said lengthwise beams, each of the sides of said transverse beams which faces another transverse beam being provided with first and second pivot points to define opposing pairs of pivot points, the first pivot points of each pair being journalled to the lower end of a link arm and the second pivot points of each pair being journalled to the lower end of at least one of said piston-and-cylinder units, the upper ends of the link arms and of the piston-and-cylinder units being journalled in common pivot points formed in the lifting frame.

One embodiment of the invention will be described on closer detail in the following with reference to the accompanying drawings, wherein

Fig. 1 is a lateral view of a lorry equipped with a lifting device in accordance with the invention,

Fig. 2 is view from above of a mounting frame incorporated in the device in accordance with the invention and illustrated on a somewhat larger scale,

Fig. 3 is a similar view of the mounting frame supplemented with the lifting device,

Fig. 4 is a longitudinal section through the lifting device shown in Fig. 3,

Fig. 5 is a section along line V—V of Fig. 3,

Fig. 6 is a perspective view of the lorry shown in Fig. 1, the lifting frame assuming its upper position, and

Figs. 7 to 9 illustrate three different embodiments of the lifting device in accordance with the invention.

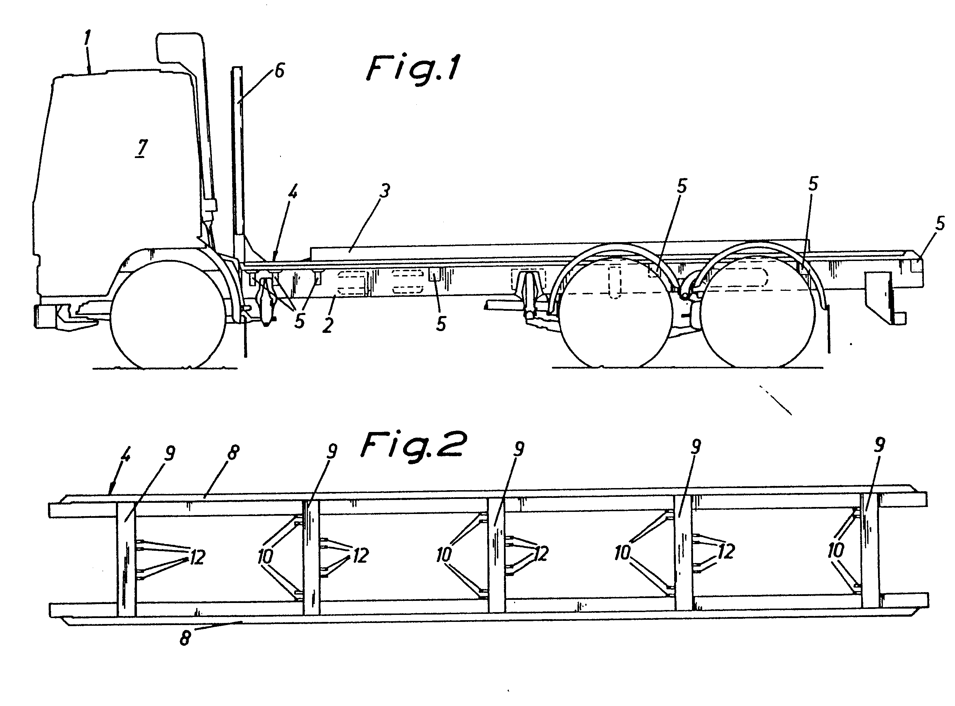

The lorry 1 illustrated in Fig. 1 has three axles and is constructed for a maximum load of 16 tons. The chassis of the lorry 1 incorporates two longitudinally extending frame beams 2 to support the intended superstructures. A lifting frame 3 is supported on a mounting frame 4 which is secured in a number of attachment points 5 to the frame beams 2. At the front end of the mounting frame 4 is positioned a vertical post 6 to protect the body 7 of the lorry.

The mounting frame 4 consists according to the embodiment illustrated, of two parallel lengthwise extending beams 8 and five transverse beams 9. The lower face of the lengthwise beams 8 form a flat surface 8' having a comparatively large area of contact against the substructure. The distance separating the two beams 8 is adjusted to allow the mounting frame to be deposited on and to be secured by means of the attachments 5 to the longitudinal frame beams 2 of all lorries available on the market of the kind intended to transport loading platforms of multipurpose type. The transverse beams 9 are provided on their front faces with attachment lugs 10 serving as points of attachment to secure link arms 11 to the beams, and on their opposite face with corresponding attachment lugs 12 to secure piston-and-cylinder units 13.

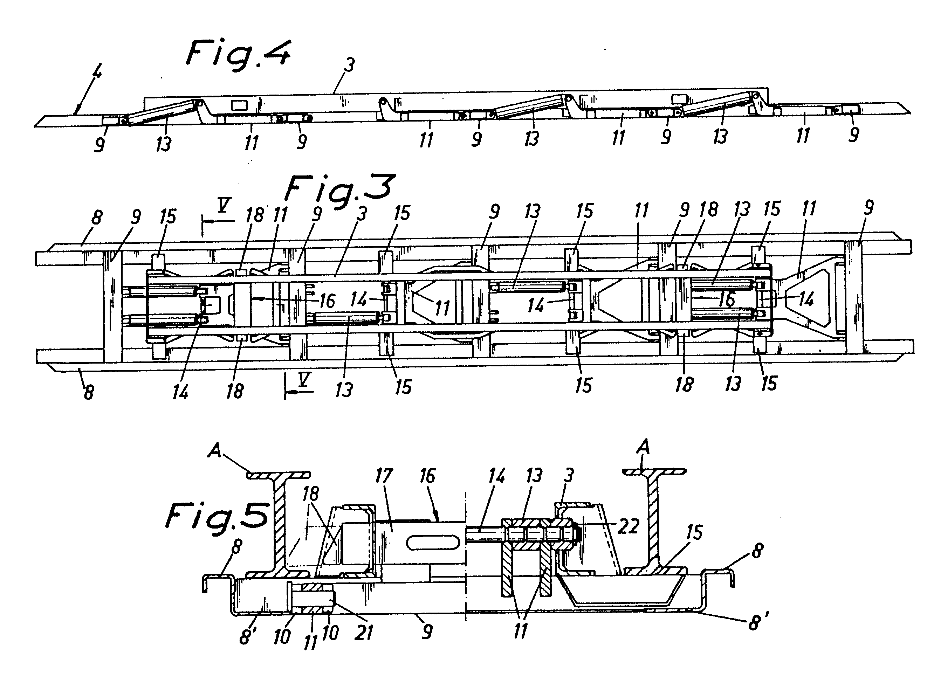

As illustrated in Fig. 4 the lower ends of the piston-and-cylinder units 13 are secured in the attachment lugs 12 and extend obliquely upwards, having their upper ends articulated in removable insert shafts 14 serving as pivot pins and extending through the lifting frame 3. The link arms 11 extend obliquely upwards and are articulated to the insert shafts 14, their upper ends straddling the journalled ends of the piston-and-cylinder units 13.

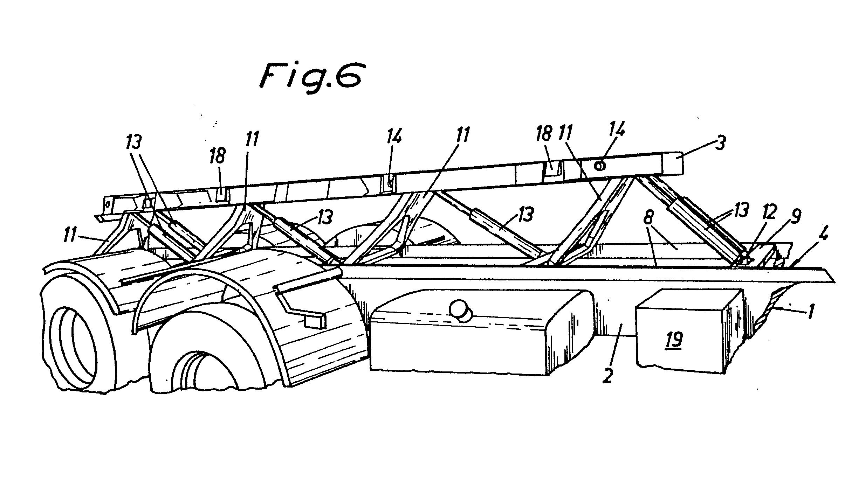

In its lower operational position the lifting frame 3 rests on the transverse beams 9 of the mounting frame 4. The lifting frame is provided with short transverse beams 15 projecting laterally across the lengthwise beams 9 of the mounting frame 4 and serving both as a surface supporting load-carriers deposited thereon and to prevent the lifting frame from being urged downwards below a predetermined minimum level when exposed to load. In addition, the lifting frame 3 is provided with two latching mechanisms 16 each one of which is formed by a piston-and-cylinder unit enclosed in a sleeve 17 and arranged, when activated, to effect simultaneously displacement of two locking pins 18, one on either side of the lifting frame, into or out of engagement with a guide channel (represented in Fig. 5 by the beams A) provided to guide a superstructure into position.

When the lifting frame 3 is to be raised all six piston-and-cylinder units 13 are activated simultaneously and the thrust then generated is directed obliquely upwards against the pivot points they have in common with the link arms 11 on the insert shafts 14. The stress arising in the mounting frame 4 as a result thereof is exerted in the opposite direction and therefore is largely eliminated on account of the points of application of the thrust in the frame being level with and the force exerted on opposite sides of the transverse beams 9. The remaining portion of the forces thus generated causes tensile stress in the longitudinal beams 8 in the mounting frame 4, but this tensile stress could easily be compensated for by adequate dimensioning. The two frame beams 2 of the lorry chassis thus need not actually take any of the stress exerted by the lifting mechanism. The attachment points 5 securing the mounting frame to the chassis need only be dimensioned to ensure that they are capable of holding the lifting mechanism including the superstructure and the maximum load to the frame beams 2 with the required margin of safety.

The mounting frame 4 including the lifting frame 3 and other lifting gear is manufactured and assembled into a preferably ready-made unit which can be tested for function including its appurtenant control and regulating mechanisms 19 and be kept in stock or delivered to the customer. The customer can easily mount the lifting device to the lorry by himself. All that needs doing is to lift the complete unit horizontally sufficiently high above the ground to allow the lorry to back in underneath it. The mounting frame 4 is lowered down onto the frame beams 2 and secured thereto with the aid of the attachments 5 on which beams are mounted also the control and regulating mechanism 19. The entire installation operation takes but a fraction of time required to install corresponding conventional equipment. This is largely due to the fact that the entire lifting equipment, with the exception of the regulating unit 19, is positioned on top of the frame beams 2 and consequently the chassis equipment mounted on the lorry by the manufacturer need not first be dismantled. No welding operations are required to effect the mounting and all responsibility as regards exactness of measurements falls on the manufacturer of the lifting equipment which is to the advantage of the customer.

In accordance with a preferred embodiment of the invention at least one pilot-governed load-control valve known as an over-centre valve is included in the regulating and control unit 19. Valves of this kind are commonly used to control the movements of movable loads. In the embodiment shown their purpose is more precisely to prevent the lifting frame 3 from moving upwards when the lorry is exposed to extreme stress, such as by centrifugal forces, jerks caused by unevenness in the road or the like. Valves of the kind referred to likewise give efficient protection in case of hose ruptures ensuring that the load is immobilised in its then position without risk of "creeping". By using valves of the kind referred to the load is securely locked to the frame beams of the lorry without it being necessary to use the locking means generally used in conventional lifting mechanisms of this kind. The prior-art locking means normally effect simultaneous locking of the lifting frame to the chassis and of the superstructure to the lifting frame in the lower position of the lifting frame. Consequently, raising and lowering of the lifting frame must be effected while the load is supported on the lifting frame without actually being secured to the frame, which could be hazardous in case the load is off-set laterally. The lifting device in accordance with the invention allows the locking pins 18 to engage the superstructure during the lifting operation until the superstructure is deposited resting on its support legs.

In accordance with another advantageous embodiment of the invention three of the piston-and-cylinder units 13 are connected alternatingly left-right lengthwise to a separate hydraulic circuit whereas the rest of the piston-and-cylinder units 13 are connected to a second hydraulic circuit. Owing to this arrangement the lorry is operable, albeit with reduced loading capacity, should a fault arise in any one of the circuits. In accordance with the embodiment of the invention shown in Figs. 1 to 6 comprising six piston-and-cylinder units the associated lifting equipment allows the lorry to handle platforms in accordance with Swedish Standard and of the type known as "Kalmar Lagab Maxi" manufactured by Kalmar Lagab AB and having lengths of 6.06 m and 6.6 m and 7.15 m and 10 or 20 feet ISO containers. However, it is quite possible to provide the lifting device with piston-and-cylinder units 13 in four positions and up to all eight positions, which allows variation of the capacity of the lifting device according to the number of piston-and-cylinder units and the hydraulic pressures used, so that depending on the chosen embodiment of the lifting device it could handle loads from eight tons up to thirty tons.

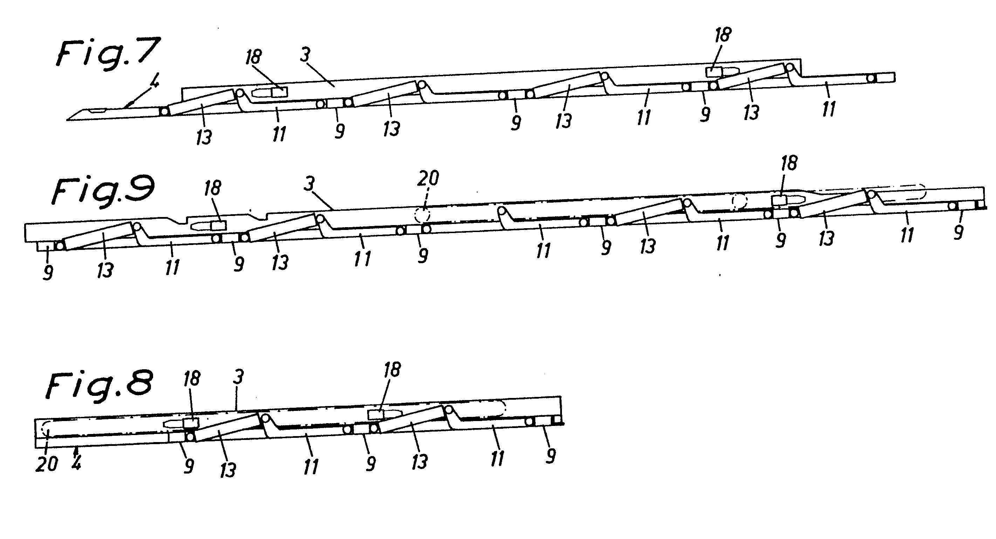

For chassis having a short wheel base the lifting equipment shown in Fig. 8 may be used. This equipment is specially designed to handle mini platforms known as "Miniflak" of a kind incorporated in a prior-art transport system developed by Kalmar Lagab AB. This system allows five mini loading platforms of the "Miniflak" type to be transported transversely on railroad flat cars having a length of 12.6 m. The mini platforms may be transferred from the railroad flat car to the lorry and vice versa without it being necessary to use lifting devices of any kind. This is made possible by the provision on the lifting frame of a chain-driven carriage 20 which is movable in the lengthwise direction of the frame and which is arranged to pull or push the mini platforms horizontally onto the railroad flat car or back. The mounting frame 4 is provided with three transverse beams 9, two link arms 11 and four piston-and-cylinder units 13. With the exception of the length of the mounting frame and the number of link arms and piston-and-cylinder units used, the lifting equipment is identical with the one defined with reference to the previous embodiments.

Fig. 9 shows a further embodiment intended for use in lorries having a long wheel base. This lifting device is capable of handling superstructures of all types referred to herein, including two mini platforms, and for this reason it is provided with a carriage 20. The mounting frame 4 is longer than in the previously described embodiments and provided with six transverse beams 9, five link arms 11 and six or eight piston-and-cylinder units 13. Apart from the length of the mounting frame and the number of link arms and piston-and-cylinder units used the lifting equipment is identical with the one according to previous embodiments.

Because of the module-unit design of the components used in all embodiments of the invention considerable advantages are obtained. Since identical link arms may be used, the link arms may be manufactured in large series, preferably through casting. Piston-and-cylinder units of identical dimensions and capacity are used throughout in all applications and consequently the price per unit will be low. All other components are identical in all embodiments and therefore they may be mass produced in a systematic and efficient manner while at the same time storage expenses may be reduced. All movable parts incorporated in the lifting equipment are all easily exchangeable, with the result that the lorry need not become unoperational on account of defects in the lifting equipment. The link arms 11 and the piston-and-cylinder units 13, for instance, are anchored both with the aid of short trunnions 21 which are easily dismantled and with the aid of the insert shafts 14 which may be removed laterally from the lifting frame 3 after loosening of a safety ring 22, see Fig. 5.

The lifting equipment in accordance with the invention may be supplemented with a prior-art suspension means compressing device acting on the rear axle by means of which it is possible to obtain three different load-deposition levels below 1.48 metre. In this manner the platforms may be adapted to loading quays of different heights. The same effect may be obtained, but in a variable manner, when the rear suspension means of the lorry is equipped with pneumatically resilient means allowing raising or lowering of the rear part of the lorry.

Valves and lines incorporated in the hydraulic system have not been illustrated in order not to unnecessarily clutter the drawing figures. For the same reason, the electric means used in preference to control the valves from the lorry driver's cabin are not shown either.

The invention is not limited to the embodiments described in the aforegoing but a number of modifications are possible within the scope of the appended claims. For instance the means for attachment of the link arms and the piston-and-cylinder units to the mounting frame and the lifting frame could be designed in a different manner. Other locking means than those suggested may be used to anchor the superstructure to the lifting frame. The invention is not either limited to the use of pilot-controlled over-centre valves in the hydraulic system.

## Claims

1. A device in lorries (1) equipped with a lifting frame (3) which is attached to the lengthwise frame beams (2) of the lorry and which is arranged to be raised and lowered by means of link arms (11) and piston-and-cylinder units (13) to support one or several load-carriers, e.g. load-carrying platforms, containers and similar load-carrier members, said load-carriers comprising lengthwise support beams and arranged to be secured to the lifting frame (3) by means of locking means (16) or to be lifted off the lorry with the aid of said frame (3), characterised by a mounting frame (4) consisting of two lengthwise extending beams (8) secured to the frame beams (2), said mounting frame being provided with at least three transverse beams (9) projecting laterally across said lengthwise beams each of the sides of said transverse beams which faces another transverse beam being provided with first and second pivot points (10, 12) to define opposing pairs of pivot points, the first pivot points (10) of each pair being journalled to the lower end of a link arm (11) and the second pivot points (12) of each pair being journalled to the lower end of at least one of said piston-and-cylinder units (13), the upper ends of the link arms and of the piston-and-cylinder units being journalled in common pivot points (14) formed in the lifting frame (3).

2. A device as claimed in claim 1, characterised in that the system controlling the operation of the piston-and-cylinder units (13) comprises at least one hydraulic load-control valve, said valve arranged to immobilize the pistons of the units in case of faults in the hydraulic lines as well as relative to forces acting to urge the pistons of the units outwards.

3. Device as claimed in any one of claims 1 or 2, characterised in that the system controlling the operation of the piston-and-cylinder units (13) forms two separate circuits, each one of which is arranged to control half the number of piston-and-cylinder units (13) used.

4. A device as claimed in any one of the preceding claims, characterised in that the upper pivot point (14) of each link arm (11) in the lifting frame (3) also serves as the upper pivot point (14) of at least one piston-and-cylinder unit (13).

5. A device as claimed in claim 2, characterised in that the means (16) to secure the load carrier (A) to the lifting frame (3) are arranged to remain activated during the lifting movement of the lifting frame (3).

## Patentansprüche

1. Vorrichtung für Lastwagen (1), die mit einem Heberahmen (3) ausgerüstet sind, welcher an den Chassislängsbalken (2) des Lastwagens befestigt und dazu vorgesehen ist, mittels Verbindungsarmen (11) und Kolben-und-Zylinder-Einheiten (13) gehoben und gesenkt zu werden, um einen oder mehrere Lastenträger wie lasttragende Bühnen, Container und ähnliche lasttragende Elemente abzustützen, wobei die Lastenträger Längsträgerbalken umfassen und dazu vorgesehen sind, durch Verriegelungsmittel (16) am Heberahmen (3) befestigt oder mit Hilfe des Heberahmens (3) vom Lastwagen abgehoben zu werden, gekennzeichnet durch einen Montagerahmen (4), welcher aus zwei sich in Längsrichtung erstreckenden, an den Chassislängsbalken (2) befestigten Balken (8) besteht, wobei der Montagerahmen mit mindestens drei Querbalken (9) versehen ist, welche sich seitlich vom einen zum anderen der sich in Längsrichtung erstreckenden Balken erstrecken, jede einem anderen Querbalken gegenüberliegende Seite der Querbalken mit ersten und zweiten Gelenkstellen (10, 12) derart versehen ist, dass Paare von gegenüberliegenden Gelenkstellen definiert werden, die ersten Gelenkstellen (10) jeden Paares am unteren Ende eines Verbindungsarmes (11), die zweiten Gelenkstellen (12) jeden Paares am unteren Ende mindestens einer der Kolben-und-Zylinder-Einheiten (13) und die oberen Enden der Verbindungsarme und der Kolben-und-Zylinder-Einheiten an gemeinsamen, am Heberahmen (3) angeformten Gelenkstellen (14) angelenkt sind.

2. Vorrichtung nach Anspruch 1, dadurch gekennzeichnet, dass das System, welches den Betrieb der Kolben-und-Zylinder-Einheiten (13) steuert, mindestens ein hydraulisches Laststeuerungsventil umfasst, wobei das Ventil dazu vorgesehen ist, im Falle von Defekten in den hydraulischen Leitungen wie auch gegen Kräfte, deren Wirkung die Kolben der Einheiten nach aussen streben lässt, die Kolben der Einheiten festzuhalten.

3. Vorrichtung nach einem der Ansprüche 1 oder 2, dadurch gekennzeichnet, dass das System, welches den Betrieb der Kolben-und-Zylinder-Einheiten (13) steuert, zwei getrennte Kreisläufe bildet, von denen jedes dazu vorgesehen ist, die Hälfte der verwendeten Anzahl Kolben-und-Zylinder-Einheiten (13) zu steuern.

4. Vorrichtung nach einem der vorangehenden Ansprüche, dadurch gekennzeichnet, dass die obere Gelenkstelle (14) jeden Verbindungsarmes (11) im Heberahmen (3) auch als obere Gelenkstelle (14) für mindestens eine Kolben-und-Zylinder-Einheit (13) dient.

5. Vorrichtung nach Anspruch 2, dadurch gekennzeichnet, dass die Mittel (16) zum Befestigen des Lastenträgers (A) auf den Heberahmen (3) dazu vorgesehen sind, während der Hebebewegung des Heberahmen (3) in Betrieb zu bleiben.

## Revendications

1. Dispositif pour camions (1) équipés d'un cadre de levage (3) fixé aux poutres longitudinales de chassis (2) du camion, dispositif prévu pour être levé et abaissé au moyen de bras de liaison (11) et d'unités à piston et cylindre (13) afin de supporter un ou plusieurs porte-charges tels que plateformes porte-charges, conteneurs et éléments porte-charges semblables, ces porte-charges comportant des poutres longitudinales de support et étant prévus pour être fixés au cadre de levage (3) par des moyens de verrouillage (16) ou pour être déposés du camion à l'aide du cadre (3), caractérisé par un cadre de montage (4) consistant en deux poutres qui s'étendent longitudinalement (8) et sont fixées aux poutres de chassis (2), le cadre de montage étant pourvu d'au moins trois poutres transversales (9) qui s'étendent latéralement de l'une à l'autre des poutres qui s'étendent longitudinalement, chacun des côtés des poutres transversales situé vis-à-vis d'une autre poutre transversale étant pourvu de premiers et de deuxièmes points d'articulation (10, 12) de façon à définir des paires opposées de points d'articulation, les premiers points d'articulation (10) de chaque paire étant articulés à l'extrémité inférieure d'un bras de liaison (11), les deuxièmes points d'articulation (12) de chaque paire étant articulés à l'extrémité inférieure d'au moins une des unités à piston et cylindre (13), les extrémités supérieures des bras de liaison et des unités à piston et cylindre étant articulées en des points d'articulation communs (14) formés dans le cadre de levage (3).

2. Dispositif selon la revendication 1, caractérisé en ce que le système qui commande le fonctionnement des unités à piston et cylindre (13) comporte au moins une vanne hydraulique de commande de charge, cette vanne étant prévue pour immobiliser les pistons des unités en cas de défaillance des conduites hydrauliques et aussi vis-à-vis de forces dont l'action tend à déplacer les pistons vers l'extérieur.

3. Dispositif selon l'une des revendications 1 ou 2, caractérisé en ce que le système qui commande le fonctionnement des unités à piston et cylindre (13) forme deux circuits séparés dont chacun est prévu pour commander une moité du nombre d'unités à piston et cylindre (13) utilisées.

4. Dispositif selon l'une des revendications précédentes, caractérisé en ce que le point d'articulation supérieur (14) de chaque bras de liaison (11) dans le cadre de levage (3) sert aussi de point d'articulation supérieur (14) pour au moins une unité à piston et cylindre (13).

5. Dispositif selon la revendication 2, caractérisé en ce que les moyens (16) destinés à verrouiller le porte-charges (A) au cadre de levage (3) sont prévus pour demeurer en fonction pendant le mouvement de levage du cadre de levage (3).

Fig.1

Fig.2

Fig.4

Fig.3

Fig.5

0 117 239

Fig.6

Fig.7

Fig.9

Fig.8